# EUROPEAN PATENT APPLICATION

(11) **EP 3 015 651 A1**
(43) Date of publication of application: **04.05.2016**
(21) Application number: 15192458.6
(22) Date of filing: 30.10.2015
(51) Int. Cl.: F01D 5/18

(54) **A COOLED GAS TURBINE BLADE COMPRISING SWIRL FEATURES INSIDE A COOLING CAVITY**

(30) Priority: 31.10.2014 US 201462073547 P
(71) Applicant: General Electric Company, Schenectady, NY 12345 (US)
(72) Inventor: BUNKER, Ronald Scott, West Chester, OH Ohio 45069 (US); BERGHOLZ, Robert Frederick, West Chester, OH Ohio 45069 (US); BRIGGS, Robert David, Cincinnati, OH Ohio 45215 (US); FELDMANN, Kevin Robert, Cincinnati, OH Ohio 45215 (US)
(74) Representative: Williams, Andrew Richard

(57) **Abstract**

An airfoil 80 for a turbine engine 10 includes a cooling cavity 90 and a cooling fluid supply cavity 92 which supplies cooling fluid to the cooling cavity through a passage 98. The cooling cavity can be provided with a swirl feature 104 for imparting a swirling motion to the cooling fluid.

## Description

### BACKGROUND

Turbine engines, and particularly gas or combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for airplanes, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, may be necessary. Typically, cooling is accomplished by ducting cooler air from the high and/or low pressure compressors to the engine components which require cooling. Temperatures in the high pressure turbine are around 1000 °C to 2000 °C and the cooling air from the compressor is about 500 to 700 °C. While the compressor air is a high temperature, it is cooler relative to the turbine air, and may be used to cool the turbine.

Turbine blades have been cooled using different methods, including internal impingement cooling, film cooling, and using thermal barrier coatings. In typical impingement cooling, the inner surface of the turbine blade is impinged with high velocity air in order to transfer heat by convection.

Particles, such as dirt, dust, sand, and other environmental contaminants, in the cooling air can cause a loss of cooling and reduced operational time or "time-on-wing" for the aircraft environment. For example, particles supplied to the turbine blades with the high velocity air used for cooling can clog, obstruct, or coat the flow passages and surfaces of the blades, which can reduce the lifespan of the turbine. This problem is exacerbated in certain operating environments around the globe where turbine engines are exposed to significant amounts of airborne particles.

### BRIEF DESCRIPTION

The invention relates to an airfoil for a turbine engine. In one aspect, the invention relates to an airfoil having a body having a leading edge wall and a trailing edge wall, with a first side wall and a second side wall extending between the leading and trailing edge walls to define a hollow interior, a separating wall located within the hollow interior to fluidly separate the hollow interior into a leading edge cavity and a cooling fluid supply cavity, with the separating wall forming a back wall of the leading edge cavity, a plurality of film holes extending through the leading edge wall to fluidly couple the leading edge cavity to an exterior of the leading edge wall, at least one cooling fluid passage extending through the separating wall to fluidly couple the supply cavity with the leading edge cavity through which a cooling jet of fluid may pass from the supply cavity into the leading edge cavity, and a swirl feature provided within the leading edge cavity at the leading edge wall and in the path of the cooling jet. When the cooling jet contacts the swirl feature, a swirling motion is imparted to the cooling jet.

In another aspect, the invention relates to an airfoil having a body having body walls defining a hollow interior, a separating wall located within the hollow interior to fluidly separate the hollow interior into a cooling cavity and a cooling fluid supply cavity, a plurality of film holes extending through one of the body walls to fluidly couple the cooling cavity to the exterior of the body, at least one cooling fluid passage extending through the separating wall to fluidly couple the supply cavity with the cooling cavity through which a cooling jet of cooling fluid may pass from the supply cavity into the cooling cavity, and a swirl feature provided within the cooling cavity at one of the body walls and in the path of the cooling jet. When the cooling jet contacts the swirl feature, a swirling motion is imparted to the cooling jet.

### BRIEF DESCRIPTION OF THE DRAWINGS

In the drawings:
FIG. 1 is a schematic cross-sectional diagram of a gas turbine engine for an aircraft having a turbine section with stationary vanes and rotating blades;
FIG. 2 is a schematic view showing an airfoil according to a first embodiment of the invention, which is suitable for use at least one of the stationary vanes or rotating blades;
FIG. 3 is a close-up view of a portion of a leading edge portion of the airfoil from FIG. 2;
FIG. 4 is a schematic cross-sectional view taken along line IV-IV of FIG. 2 showing a swirl feature of the airfoil;
FIG. 5 is a plan view of the swirl feature from FIG. 4;
FIG. 6 is a side view of the swirl feature from FIG. 4;
FIG. 7 is a side view of a swirl feature according to a second embodiment of the invention;
FIG. 8 is a side view of a swirl feature according to a third embodiment of the invention; and
FIG. 9 is a perspective view of a swirl feature according to a second embodiment of the invention.

### DETAILED DESCRIPTION

The described embodiments of the present invention are directed to cooling an engine component, particularly in a turbine engine. For purposes of illustration, the present invention will be described with respect to an aircraft gas turbine engine. It will be understood, however, that the invention is not so limited and may have general applicability in non-aircraft applications, such as other mobile applications and non-mobile industrial, commercial, and residential applications. It is further noted that while the various embodiments of systems, methods, and other devices related to the invention are discussed and shown herein in the context of an airfoil of a turbine engine, the invention may be applied to other sections of a turbine engine. Some non-limiting examples may include, but are not limited to, combustor liners, turbine shrouds and hangers, turbine disks, and turbine seals. Further, the invention may have non-engine applications as well.

As used herein, the terms "axial" or "axially" refer to a dimension along a longitudinal axis of an engine. The term "forward" used in conjunction with "axial" or "axially" refers to moving in a direction toward the engine inlet, or a component being relatively closer to the engine inlet as compared to another component. The term "aft" used in conjunction with "axial" or "axially" refers to a direction toward the rear or outlet of the engine relative to the engine centerline.

As used herein, the terms "radial" or "radially" refer to a dimension extending between a center longitudinal axis of the engine and an outer engine circumference. The use of the terms "proximal" or "proximally," either by themselves or in conjunction with the terms "radial" or "radially," refers to moving in a direction toward the center longitudinal axis, or a component being relatively closer to the center longitudinal axis as compared to another component. The use of the terms "distal" or "distally," either by themselves or in conjunction with the terms "radial" or "radially," refers to moving in a direction toward the outer engine circumference, or a component being relatively closer to the outer engine circumference as compared to another component.

All directional references (e.g., radial, axial, proximal, distal, upper, lower, upward, downward, left, right, lateral, front, back, top, bottom, above, below, vertical, horizontal, clockwise, counterclockwise) are only used for identification purposes to aid the reader's understanding of the present invention, and do not create limitations, particularly as to the position, orientation, or use of the invention. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto may vary.

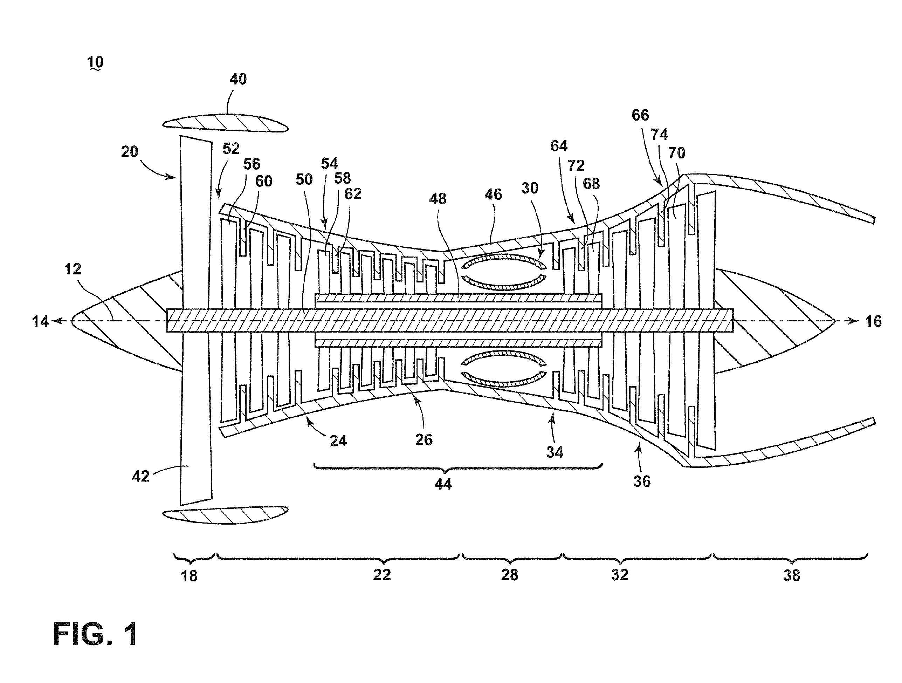

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12.

The HP compressor 26, the combustor 30, and the HP turbine 34 form a core 44 of the engine 10 which generates combustion gases. The core 44 is surrounded by core casing 46 which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 may be provided in a ring and may extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 may be provided in a ring and may extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 may bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid may be, but is not limited to, fluid discharged from the LP compressor 24 or the HP compressor 26.

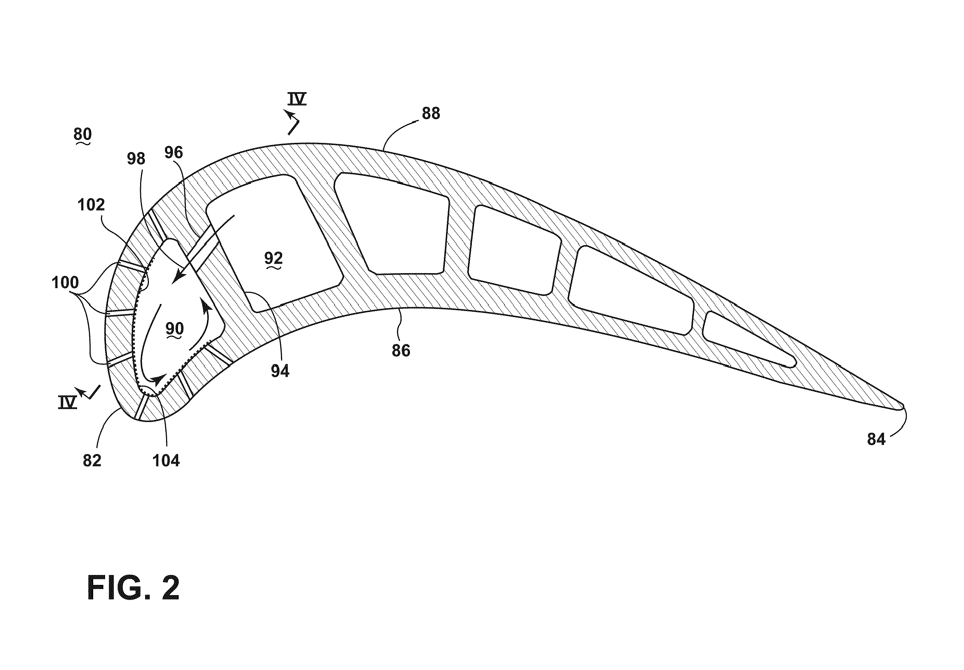

FIG. 2 is a schematic view showing an airfoil 80 according to a first embodiment of the invention. The airfoil 80 depicted is a turbine blade having a leading edge wall 82 and a trailing edge wall 84 joined by first and second side walls, shown herein as a pressure or concave side wall 86 and a suction or convex side wall 88. The walls 82-88 can collectively form a peripheral wall defining an at least partially hollow interior.

The hollow interior can be separated into multiple cavities, including at least one cooling cavity 90 and at least one supply cavity 92 which supplies cooling fluid to the cooling cavity. The cooling cavity 90 can be anywhere within the airfoil 80. In the illustrated example, the cooling cavity is formed at a leading edge of the airfoil 80, and may be referred to herein as a leading edge cavity 90. The supply cavity 92 is in fluid communication with a source of cooling fluid to provide cooling fluid to the leading edge cavity 90. As described above with reference to FIG. 1, the source of cooling fluid may be fluid discharged from the fan 20, the LP compressor 24, or the HP compressor 26 of the engine 10.

A separating wall 94 fluidly separates the leading edge cavity 90 from the supply cavity 92, and forms a back wall of the leading edge cavity 90. The separating wall 94 can span between the concave and convex side walls 86, 88 as shown, or may span between one of the side walls 86, 88 and the leading edge wall 82.

While the present description is directed to the leading edge cavity 90 located at the leading edge of the airfoil 80, other cavities or chambers within an airfoil can also be cooled in accordance with the present invention. Also, while the airfoil 80 described is a turbine blade, other airfoil can also be cooling in accordance with the present invention. Some non-limiting examples include a nozzle or vane of a turbine engine.

The leading edge cavity 90 includes at least one inlet in the form of a cooling fluid passage 96 that extends through the separating wall 94 to fluidly couple the supply cavity 92 with the leading edge cavity 90. A cooling jet of fluid 98 may pass through the passage from the supply cavity 92 into the leading edge cavity 90. The cavities 90, 92 and passage 96 can extend along the airfoil 80, such as between the root and tip in the case of a turbine blade. Alternatively, multiple passages 96 can be provided in the wall 94 and arranged at spaced intervals along the height of the airfoil 80.

The airfoil 80 further includes at least one film hole 100 that extends through at least one of the walls 82-88. As illustrated, multiple film holes 100 are provided and extend radially through the leading edge wall 82 to fluidly couple the leading edge cavity 90 to an exterior of the leading edge wall 82. Cooling fluid may pass out of the leading edge cavity 90 via the film holes 100 to form a cooling film over some or all of the airfoil 80.

Within the leading edge cavity 90, the leading edge wall 82 has an inner surface 102 that can be generally concave. The concave inner surface 102 is provided with a swirl feature 104 in the path of the cooling jet 98. When the cooling jet 98 enters the leading edge cavity 90 and contacts the swirl feature 104, a swirling motion is imparted to the cooling jet 98.

In typical operation, cooling fluid flows through the supply cavity 92 in a generally linear fashion from the root to the tip of the airfoil 80. The cooling fluid turns and enters the passage 96 and is injected tangentially, or approximately tangentially, into the leading edge cavity 90, relative to the immediate portion of the concave inner surface 102 of the leading edge wall 82, as cooling jet 98. In the leading edge cavity 90, the fluid contacts the concave inner surface 102 and swirls in a circular or spiral flow path. When the cooling jet 98 contacts the swirl feature 104, additional vortical motion is imparted to the cooling fluid, which may also lead to increased turbulence. The cooling fluid passing the inner surface 102 accepts energy as heat from the airfoil 80 by convective heat transfer, and will thereby be heated. The heated cooling fluid will then be released from the leading edge cavity 90 through film holes 100.

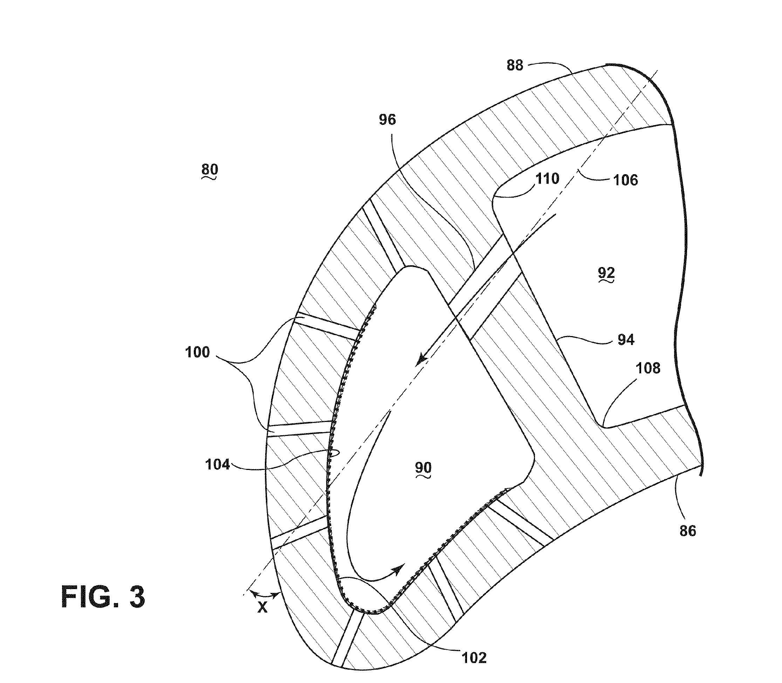

FIG. 3 is a close-up view of a portion FIG. 2. The passage 96 can extend tangentially, or approximately tangentially from the leading edge cavity 90 in order to introduce the cooling jet 98 at an tangential or approximately tangential angle to the inner surface 102. Since the passage 96 is tangential, or approximately tangential, direct impingement of the cooling fluid on the inner surface 102 is eliminated. Instead, the cooling fluid flows over the curved inner surface 102 and swirls within the leading edge cavity 90. By "approximately tangential", the passage 96 can be configured to minimize the angle between a streamline of the cooling jet 98 and the inner surface 102 without the angle being truly tangential to the inner surface 102. Optionally, the passage 96 can be configured to impart some angled impingement on the inner surface; in this case, the cooling fluid still swirls within the leading edge cavity 90 by virtue of the swirl feature 104. A truly tangential passage 96 may not be practical in some applications, but that passage 96 can be configured to approximate a tangential introduction of the cooling jet 98. For example, as shown the passage 96 is approximately tangential, and a centerline 106 of the passage 96 intersects the leading edge wall 82 at an angle (X) that is non-orthogonal in order to minimize the angle between a streamline of the cooling jet 98 and the inner surface 102.

The separating wall 94 can span between the concave and convex side walls 86, 88 to form junctions 108, 110 with the side walls 86, 88, with the passage 96 located proximate to or at one of the junctions 108, 110. This offsets the passage 96 along the length of the separating wall 94, which forms the back wall of the leading edge cavity 90, and so in turn offsets the passage 96 with respect to the leading edge cavity 90. This offset prevents too much flow recirculation in the cavity 90. In the illustrated embodiment the passage 96 is located proximate to the junction 110 with the convex side wall 88. While shown herein as having a single passage 96, it is also understood that the swirl features 104 may be implemented in a cooling cavity having alternating jets from passage 96 on two sides of the cavity. The two passages 96 can extend along the airfoil 80, such as between the root and tip in the case of a turbine blade. Alternatively, two sets of multiple passages 96 can be provided in the wall 94 and arranged at spaced intervals along the height of the airfoil 80.

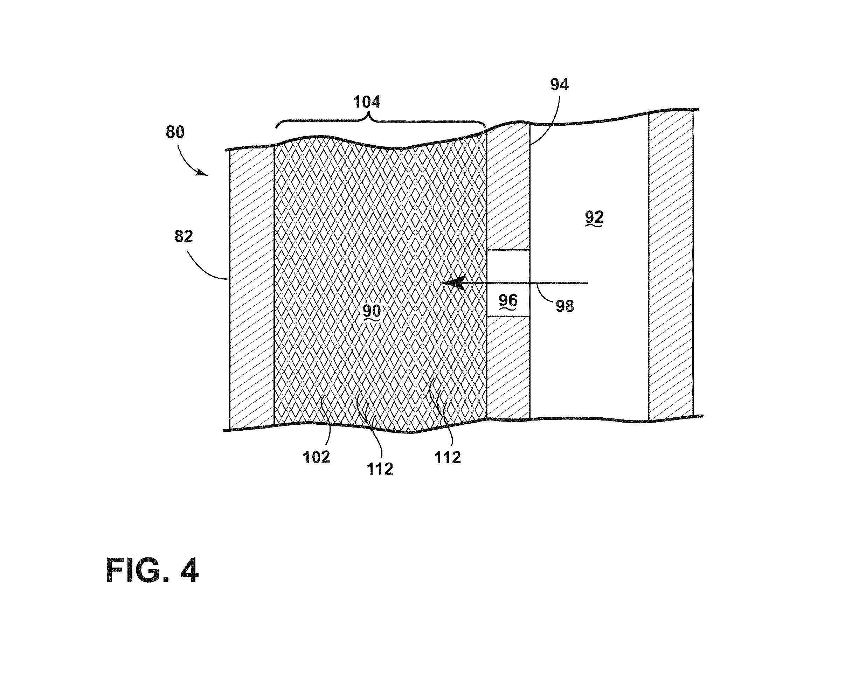

FIG. 4 is a schematic cross-sectional view of the airfoil 80 taken along line IV-IV of FIG. 2. The swirl feature 104 of the illustrated embodiment comprises a plurality of swirl features provided in and/or extending from the leading edge wall 82. The swirl features 104 are shallow formations that have a predetermined arrangement to reinforce swirl flow behavior of the cooling fluid while also delivering cooling enhancement.

In the specific example illustrated herein, the swirl features 104 comprise an array of concavities in the form of a series of intersecting grooves 112. The grooves 112 are unidirectional, and can be helically-oriented with respect to cooling jet 98 to generate smaller, local vortices which reinforce the larger jet swirl flow at the leading edge wall 82. This keeps more particles entrained in the fluid passing through the leading edge cavity 90, rather than collecting in the leading edge cavity 90.

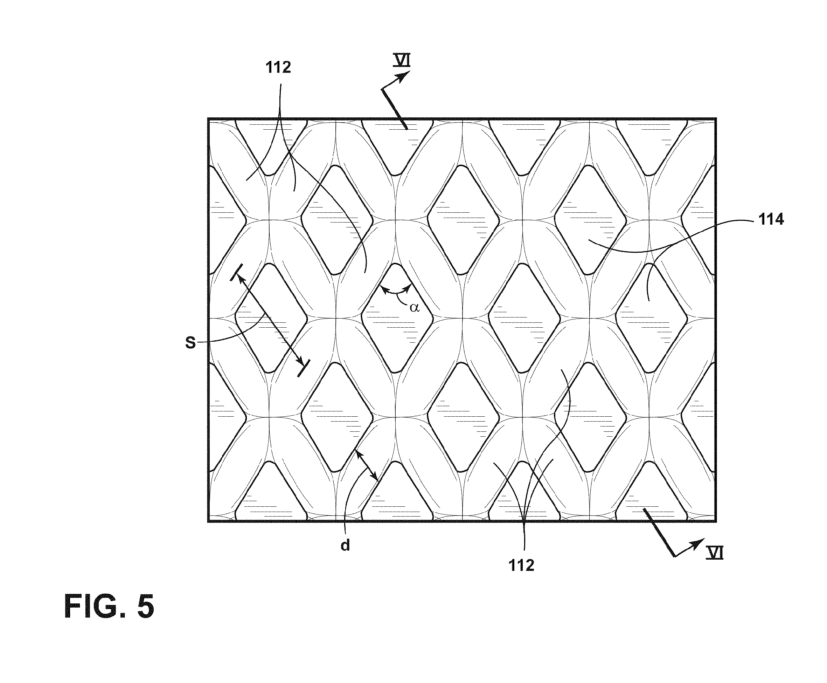

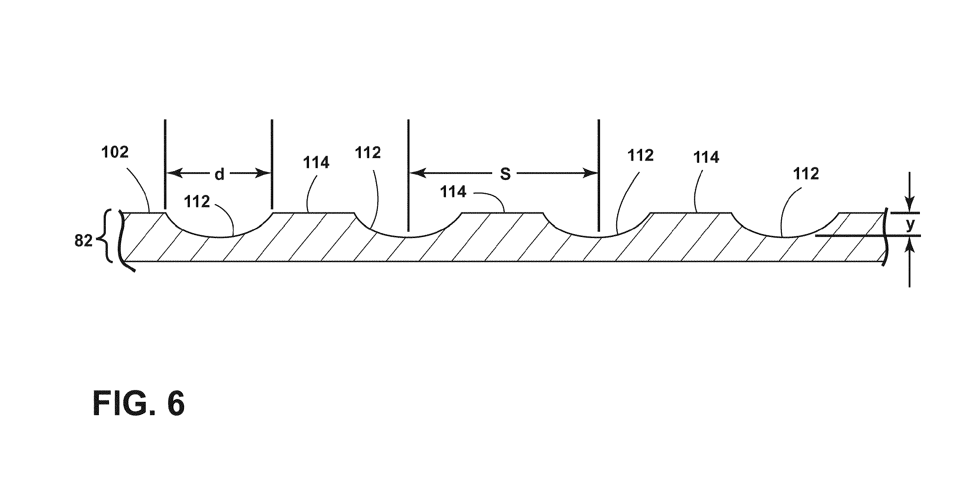

FIGS. 5-6 are plan and side views of the swirl features 104 from FIG. 4. The grooves 112 can have various cross-sectional shapes, including, but not limited to, hemispherical, oblong, square, rectangular, trapezoidal, and combinations thereof. The grooves 112 illustrated herein are hemispherical. Additional swirl features extending from the leading edge wall 82 can be defined by the spaces between the intersecting grooves 112. The grooves 112 illustrated herein define multiple spaces forming an array of diamond-shaped features 114.

The grooves 112 having a depth (y) defined at the centerline of the groove 112 and a surface diameter (d) that typically remains constant across the array. The ratio of the depth to surface diameter y/d can be in the range of 0.2 to 0.5, and more specifically in the range of 0.2 to 0.33. The spacing (S) of the grooves 112 centerline-to-centerline, running parallel to each other, also typically remains constant across the array, and ratio of the spacing to the surface diameter S/d is in the range of 4 to 8, and more specifically in the range of 5 to 6. The diamond-shaped features 114 can have an included acute angle (α) in the range of 45 to 90 degrees, and more specifically 60 degrees.

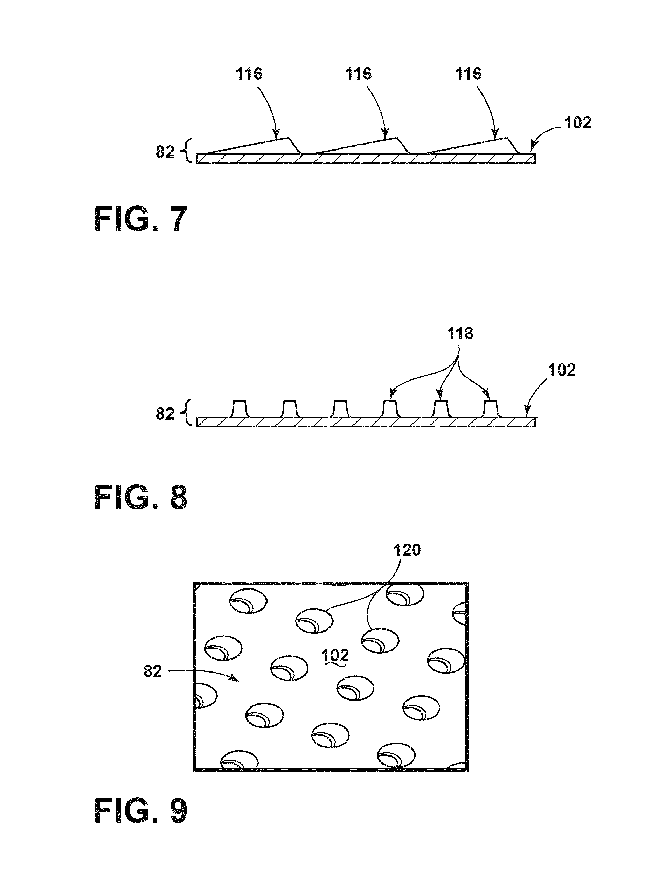

FIGS. 7-9 show some other examples of swirl features for the airfoil 80. Such swirl features may also be referred to as flow enhancers. In FIG. 7, the leading edge wall 82 is provided with swirl features in the form of fastback turbulators 116 projecting from the inner surface 102. Suitable turbulators 116 are more fully described in U.S. Patent No. 8,408,872, issued April 2, 2013, which is incorporated herein by reference in its entirety. In FIG. 8, the leading edge wall 82 is provided with swirl features in the form of pin fins 118 projecting from the inner surface 102. In FIG. 9, the leading edge wall 82 is provided with swirl features in the form of concave dimples 120 within the inner surface 102. The use of the turbulators 116 or pin fins 118 may require repositioning the placement of film holes 100 in the airfoil 80, while the use of other swirl features disclosed herein does not require film hole repositioning.

The various embodiments of systems, methods, and other devices related to the invention disclosed herein provide improved cooling for engine structures, particularly a turbine blade. One advantage that may be realized in the practice of some embodiments of the described systems is that the design is resistant to particle deposition and accumulation internally of the turbine blade. Current turbine blades exhibit detrimental particle accumulation to various degrees depending on the operational, environmental, and design factors. The blade leading edge cavity can become completely coated with particles, as well as having accumulation inside the crossover holes and blockages of the film holes. By eliminating particle accumulation within airfoil lead edges, and especially in high pressure turbines, the service life of these parts can be increased. Another advantage that may be realized in the practice of some embodiments of the described systems and methods is that the features allow current placement of film holes in the airfoil.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An airfoil for a turbine section of a turbine engine, comprising:
   a body having a leading edge wall and a trailing edge wall, with a first side wall and a second side wall extending between the leading and trailing edge walls to define a hollow interior;
   a separating wall located within the hollow interior to fluidly separate the hollow interior into a leading edge cavity and a cooling fluid supply cavity, with the separating wall forming a back wall of the leading edge cavity;
   a plurality of film holes extending through the leading edge wall to fluidly couple the leading edge cavity to an exterior of the leading edge wall;
   at least one cooling fluid passage extending through the separating wall to fluidly couple the supply cavity with the leading edge cavity through which a cooling jet of fluid may pass from the supply cavity into the leading edge cavity; and
   a swirl feature provided within the leading edge cavity at the leading edge wall and in the path of the cooling jet;
   wherein, when the cooling jet contacts the swirl feature, a swirling motion is imparted to the cooling jet.
2. The airfoil of clause 1 wherein the at least one cooling fluid passage is oriented such that the cooling jet of fluid flows at least approximately tangentially to an inner surface of the leading edge wall.
3. The airfoil of any preceding clause wherein the at least one cooling fluid passage is oriented such that the centerline intersects the leading edge wall at a non-orthogonal angle.
4. The airfoil of any preceding clause wherein the separating wall spans between the first and second side walls.
5. The airfoil of any preceding clause wherein the separating wall forms a junction with at least one of the first side wall and the second side wall, and the at least one cooling fluid passage is located in the separating wall proximate to the junction.
6. The airfoil of any preceding clause wherein the at least one cooling fluid passage is located at the junction.
7. The airfoil of any preceding clause wherein the swirl feature comprises a plurality of swirl features.
8. The airfoil of any preceding clause wherein at least some of the plurality of swirl features are at least one of provided in the leading edge wall or extending from the leading edge wall.
9. The airfoil of any preceding clause wherein some of the plurality of swirl features are provided in the leading edge wall and some of the plurality of swirl features extend from the leading edge wall.
10. The airfoil of any preceding clause wherein the swirl features provided in the leading edge wall comprise concavities.
11. The airfoil of any preceding clause wherein the concavities comprise at least one of dimples or grooves.
12. The airfoil of any preceding clause wherein the grooves comprise at least one of intersecting grooves or helical grooves.
13. The airfoil of any preceding clause wherein the grooves comprise intersecting grooves and wherein the swirl features extending from the leading edge comprise spaces defined between the intersecting grooves.
14. The airfoil of any preceding clause wherein the plurality of swirl features have a predetermined arrangement.
15. The airfoil of any preceding clause wherein the predetermined arrangement comprises an array.
16. The airfoil of any preceding clause wherein the swirl feature is at least one of provided in the leading edge wall or extending from the leading edge wall.
17. The airfoil of any preceding clause wherein the swirl feature provided in the leading edge wall comprises a concavity.
18. The airfoil of any preceding clause wherein the concavity comprises at least one of a dimple or a groove.
19. The airfoil of any preceding clause wherein the swirl feature provided in the leading edge wall comprises multiple intersecting grooves or helical grooves.
20. The airfoil of any preceding clause wherein the swirl feature provided in the leading edge wall comprises multiple intersecting grooves and wherein the swirl feature extending from the leading edge comprise spaces defined between the intersecting grooves.
21. The airfoil of any preceding clause wherein the spaces form diamond-shaped features.
22. The airfoil of any preceding clause wherein the airfoil comprises at least one of a nozzle, a vane or a blade.
23. An airfoil for a turbine section of a turbine engine, comprising:
   a body having body walls defining a hollow interior;
   a separating wall located within the hollow interior to fluidly separate the hollow interior into a cooling cavity and a cooling fluid supply cavity;
   a plurality of film holes extending through one of the body walls to fluidly couple the cooling cavity to the exterior of the body;
   at least one cooling fluid passage extending through the separating wall to fluidly couple the supply cavity with the cooling cavity through which a cooling jet of cooling fluid may pass from the supply cavity into the cooling cavity; and
   a swirl feature provided within the cooling cavity at one of the body walls and in the path of the cooling jet;
   wherein, when the cooling jet contacts the swirl feature, a swirling motion is imparted to the cooling jet.
24. The airfoil of any preceding clause wherein the at least one cooling fluid passage is oriented such that the cooling jet of fluid flows at least approximately tangentially to an inner surface of one of the body walls.
25. The airfoil of any preceding clause wherein the at least one cooling fluid passage is oriented such that the centerline intersects one of the body walls at a non-orthogonal angle.
26. The airfoil of any preceding clause wherein the separating wall spans between two body walls.
27. The airfoil of any preceding clause wherein the separating wall forms a junction with at least one of the body walls, and the at least one cooling fluid passage is located in the separating wall proximate to the junction.
28. The airfoil of any preceding clause wherein the at least one cooling fluid passage is located at the junction.
29. The airfoil of any preceding clause wherein the swirl feature comprises a plurality of swirl features.
30. The airfoil of any preceding clause wherein at least some of the plurality of swirl features are at least one of provided in one of the body walls or extending from one of the body walls.
31. The airfoil of any preceding clause wherein some of the plurality of swirl features are provided in one of the body walls and some of the swirl features extend from one of the body walls.
32. The airfoil of any preceding clause wherein the swirl features provided in one of the body walls comprise concavities.
33. The airfoil of any preceding clause wherein the concavities comprise at least one of dimples or grooves.
34. The airfoil of any preceding clause wherein the grooves comprise at least one of intersecting grooves or helical grooves.
35. The airfoil of any preceding clause wherein the grooves comprise intersecting grooves and where the swirl features extending from the one of the body walls comprise spaces defined between the intersecting grooves.
36. The airfoil of any preceding clause wherein the plurality of swirl features have a predetermined arrangement.
37. The airfoil of any preceding clause wherein the predetermined arrangement comprises an array.
38. The airfoil of any preceding clause wherein the swirl feature is at least one of provided in one of the body walls or extending from one of the body walls.
39. The airfoil of any preceding clause wherein the swirl feature provided in one of the body walls comprises a concavity.
40. The airfoil of any preceding clause wherein the concavity comprises at least one of a dimple or a groove.
41. The airfoil of any preceding clause wherein the swirl feature provided in one of the body walls comprises multiple intersecting grooves or helical grooves.
42. The airfoil of any preceding clause wherein the swirl feature provided in one of the body walls comprises multiple intersecting grooves and wherein the swirl feature extending from one of the body walls comprise spaces defined between the intersecting grooves.
43. The airfoil of any preceding clause wherein the spaces form diamond-shaped features.
44. The airfoil of any preceding clause wherein the airfoil comprises at least one of a nozzle, a vane or a blade.

## Claims

1. An airfoil (80) for a turbine section (32) of a turbine engine (10), comprising:
a body having a leading edge wall (82) and a trailing edge wall (84), with a first side wall (86) and a second side wall (88) extending between the leading and trailing edge walls to define a hollow interior;
a separating wall (94) located within the hollow interior to fluidly separate the hollow interior into a leading edge cavity (90) and a cooling fluid supply cavity (92), with the separating wall forming a back wall of the leading edge cavity;
a plurality of film holes (100) extending through the leading edge wall (82) to fluidly couple the leading edge cavity (90) to an exterior of the leading edge wall (82);
at least one cooling fluid passage (96) extending through the separating wall (94) to fluidly couple the supply cavity (92) with the leading edge cavity (90) through which a cooling jet of fluid (98) may pass from the supply cavity into the leading edge cavity; and
a swirl feature (104) provided within the leading edge cavity (96) at the leading edge wall (82) and in the path of the cooling jet (98);
wherein, when the cooling jet (98) contacts the swirl feature (104), a swirling motion is imparted to the cooling jet.

2. The airfoil (80) of claim 1, wherein the at least one cooling fluid passage (96) is oriented such that the cooling jet of fluid (98) flows at least approximately tangentially to an inner surface of the leading edge wall (82).

3. The airfoil (80) of either of claim 1 or 2, wherein the at least one cooling fluid (96) passage is oriented such that the centerline intersects the leading edge wall (82) at a non-orthogonal angle.

4. The airfoil (80) of any preceding claim, wherein the separating wall (94) forms a junction (108, 110) with at least one of the first side wall (86) and the second side wall (88), and the at least one cooling fluid passage (96) is located in the separating wall (94) proximate to the junction.

5. The airfoil (80) of any preceding claim, wherein the swirl feature (104) comprises a plurality of swirl features, wherein at least some of the plurality of swirl features are at least one of provided in the leading edge wall (82) or extending from the leading edge wall, and wherein some of the plurality of swirl features are provided in the leading edge wall and some of the plurality of swirl features extend from the leading edge wall.

6. The airfoil (80) of claim 5, wherein the swirl features (104) provided in the leading edge wall (82) comprise concavities, and wherein the concavities comprise at least one of dimples or grooves (112).

7. The airfoil (80) of claim 6, wherein the grooves (112) comprise at least one of intersecting grooves or helical grooves, and wherein the grooves comprise intersecting grooves and wherein the swirl features extending from the leading edge comprise spaces defined between the intersecting grooves.

8. The airfoil (80) of any of claims 5 to 7, wherein the plurality of swirl features (104) have a predetermined arrangement, and wherein the predetermined arrangement comprises an array.

9. The airfoil (80) of any preceding claim, wherein the swirl feature (104) provided in the leading edge wall (82) comprises multiple intersecting grooves or helical grooves (112), wherein the swirl feature provided in the leading edge wall comprises multiple intersecting grooves and wherein the swirl feature extending from the leading edge comprise spaces defined between the intersecting grooves, and wherein the spaces form diamond-shaped features.

10. The airfoil (80) of any preceding claim, wherein the airfoil comprises at least one of a nozzle, a vane or a blade.

11. An airfoil (80) for a turbine section (32) of a turbine engine (10), comprising:
a body having body walls defining a hollow interior;
a separating wall (94) located within the hollow interior to fluidly separate the hollow interior into a cooling cavity (90) and a cooling fluid supply cavity (92);
a plurality of film holes (100) extending through one of the body walls to fluidly couple the cooling cavity (90) to the exterior of the body;
at least one cooling fluid passage (96) extending through the separating wall (94) to fluidly couple the supply cavity (92) with the cooling cavity (90) through which a cooling jet of cooling fluid (98) may pass from the supply cavity into the cooling cavity; and
a swirl feature (104) provided within the cooling cavity (90) at one of the body walls and in the path of the cooling jet;
wherein, when the cooling jet contacts the swirl feature, a swirling motion is imparted to the cooling jet (98).

12. The airfoil (80) of claim 11, wherein the at least one cooling fluid passage (96) is oriented such that the cooling jet of fluid (98) flows at least approximately tangentially to an inner surface of one of the body walls.

13. The airfoil (80) of either of claims 11 or 12, wherein the at least one cooling fluid passage (96) is oriented such that the centerline intersects one of the body walls at a non-orthogonal angle.

14. The airfoil (80) of any of claims 11 to 13, wherein the separating wall (94) forms a junction (108, 110) with at least one of the body walls, and the at least one cooling fluid passage (96) is located in the separating wall proximate to the junction.

15. The airfoil (80) of any of claims 11 to 14, wherein the swirl feature (104) comprises a plurality of swirl features (104), wherein at least some of the plurality of swirl features are at least one of provided in one of the body walls or extending from one of the body walls, and wherein some of the plurality of swirl features are provided in one of the body walls and some of the swirl features extend from one of the body walls.
